# EUROPÄISCHE PATENTANMELDUNG

(11) **EP 3 205 195 A1**
(43) Veröffentlichungstag der Anmeldung: **16.08.2017**
(21) Anmeldenummer: 17000172.1
(22) Anmeldetag: 03.02.2017
(51) Int. Cl.: A01C 7/08, A01C 7/10

(54) **EINHEIT ZUR ENTNAHME EINER PROBE AN VERTEILGUT AUS EINER VERTEILMASCHINE SOWIE PNEUMATISCHE VERTEILMASCHINE UND AUFNAHMEEINRICHTUNG EINER SOLCHEN EINHEIT**

(30) Priorität: 10.02.2016 DE 202016000845 U
(71) Anmelder: RAUCH Landmaschinenfabrik GmbH, 76547 Sinzheim (DE)
(72) Erfinder: Klein, Frédéric, F-67000 Strasbourg (FR); Schickinger, Harald, 76547 Sinzheim (DE); Boos, Florian, 76547 Sinzheim (DE)
(74) Vertreter: Lenz, Steffen

(57) **Zusammenfassung**

Es wird eine Einheit zur Entnahme einer Probe an Verteilgut aus einer Verteilmaschine (100) vorgeschlagen, umfassend
- eine pneumatische Verteilmaschine mit einem unterhalb des Auslasses (108) eines Dosierorgans (104) angeordneten Injektorgehäuse (119) mit einer Übergabekammer (109), in welche eine an ein Gebläse anschließbare Düse (112) und ein hiervon beabstandeter, an eine Versorgungsleitung (115) anschließbarer Diffusor (113) mündet; und
- eine Aufnahmeeinrichtung (200) zur Aufnahme der Probe des durch das Dosierorgan dosierten Verteilgutes, welche eine Einlassöffnung (202) für das Verteilgut aufweist.

Die Erfindung sieht vor, dass ein Mündungsabschnitt von Düse bzw. Diffusor zwischen seiner Betriebsposition, in welcher er in die Übergabekammer mündet, und einer Öffnungsposition, in welcher er außerhalb der senkrechten Projektion des Auslasses des Dosierorgans angeordnet ist und die Übergabekammer zugänglich macht, hin und her bewegbar ist. Die Einlassöffnung der Aufnahmeeinrichtung weist dabei einen Querschnitt (Q) auf, welcher wenigstens dem Querschnitt des Auslasses des Dosierorgans entspricht, so dass die Aufnahmeeinrichtung derart in die Übergabekammer einführbar ist, dass ihre Einlassöffnung unterhalb des Auslasses angeordnet ist, wenn sich der Mündungsabschnitt von Düse bzw. Diffusor in seiner Öffnungsposition befindet, um das dosierte Verteilgut anlässlich einer Probennahme aufzunehmen.

## Beschreibung

Die Erfindung betrifft eine Einheit zur Entnahme einer Probe an Verteilgut, wie Saatgut und/oder Dünger, aus einer Verteilmaschine, umfassend
(a) eine pneumatische Verteilmaschine mit wenigstens einem Dosierorgan und einem unterhalb eines Auslasses des Dosierorgans angeordneten Injektorgehäuse, in welchem eine Übergabekammer untergebracht ist, in welche einerseits eine an ein Gebläse anschließbare Düse, andererseits ein an wenigstens eine Versorgungsleitung anschließbarer Diffusor mündet, wobei die Mündung der Düse mit Abstand von der Mündung des Diffusors angeordnet ist; und
(b) wenigstens eine Aufnahmeeinrichtung zur Aufnahme der Probe des mittels des wenigstens einen Dosierorgans der Verteilmaschine dosierten Verteilgutes, wobei die Aufnahmeeinrichtung wenigstens eine Einlassöffnung für das Verteilgut aufweist.

Die Erfindung betrifft ferner eine zur Entnahme einer Probe an Verteilgut, wie Saatgut und/oder Dünger, ausgebildete pneumatische Verteilmaschine, insbesondere einer Einheit der vorgenannten Art, mit wenigstens einem Dosierorgan und einem unterhalb eines Auslasses des Dosierorgans angeordneten Injektorgehäuse, in welchem eine Übergabekammer untergebracht ist, in welche einerseits eine an ein Gebläse anschließbare Düse, andererseits ein an wenigstens eine Versorgungsleitung anschließbarer Diffusor mündet, wobei die Mündung der Düse mit Abstand von der Mündung des Diffusors angeordnet ist. Schließlich betrifft die Erfindung eine Aufnahmeeinrichtung einer Einheit zur Entnahme einer Probe an Verteilgut, wie Saatgut und/oder Dünger, der vorgenannten Art aus einer Verteilmaschine.

Pneumatische Verteilmaschinen der eingangs genannten Art finden in der Landwirtschaft zum Ausbringen von vornehmlich pulver- oder partikelförmigem Verteilgut, wie insbesondere Saatgut und/oder Dünger, verbreitet Verwendung. Dabei wird das in der Regel in einem Behälter auf Vorrat gehaltene Verteilgut mittels des üblicherweise unterhalb einer Auslauföffnung des Behälters angeordneten Dosierorgans dosiert und wird der dosierte Massenstrom an Verteilgut an eine Mehrzahl an dem Dosierorgan nachgeordneten Verteilorganen überführt. Zur Überführung des Verteilgutes an die Verteilorgane dient das Gebläse, welches die erzeugte Förderluft über die Düse der Übergabekammer zuführt, wo der mittels des Dosierorgans dosierte Verteilgutstrom in den Förderluftstrom eindispergiert wird, wonach dieser über einen Diffusor bzw. über eine Expansionsdüse von der Übergabekammer an eine Versorgungs- bzw. Förderleitung übergeben wird, welche in einen Verteilerkopf mündet. Die aus der Düse und dem üblicherweise nach Art einer Expansionsdüse ausgestalteten Diffusor mit der zwischen der Düse und dem Diffusor angeordneten Übergabekammer gebildete Baugruppe wird auch als "Injektor" bezeichnet und umfasst das Injektorgehäuse, in welchem die Düse, der Diffusor und die Übergabekammer untergebracht sind. Der Verteilerkopf weist eine Mehrzahl an Abgängen auf, welche in der Regel um dessen Umfang verteilt angeordnet sind und an welche sich je eine Verteilerleitung anschließt, welche dazu dient, den Verteilgutstrom in der Anzahl an Verteilerleitungen entsprechenden Teilströmen je einer Verteileinrichtung zuzuführen, welche je nach gewünschter Arbeitsbreite mit unterschiedlichem Seitenabstand von der Verteilmaschine angeordnet sind.

Handelt es sich bei der pneumatischen Verteilmaschine beispielsweise um einen Düngerstreuer, so können die Verteileinrichtungen z.B. von am Ende der Verteilerleitungen befindlichen Prallplatten gebildet sein. Handelt es sich hingegen bei der pneumatischen Verteilmaschine beispielsweise um eine Sämaschine, so können die Verteileinrichtungen z.B. Säscharen umfassen, um das Saatgut in den Boden einzubringen. Derartige Verteilmaschinen sind unter anderem aus den DE 44 34 963 A1, DE 197 47 029 A1 oder DE 10 2010 053 883 A1 bekannt.

Der insbesondere in seinem mit dem Verteilgut befüllten Zustand schwere Behälter ist bei bekannten pneumatischen Verteilmaschinen üblicherweise an einer Tragkonstruktion angeordnet, welche sich unterhalb des Behälters erstreckt und diesen abstützt. Die Tragkonstruktion kann dabei entweder von einem Dreipunkt-Kraftheber einer Zugmaschine, wie eines Traktors, aufgenommen werden, oder die Verteilmaschine ist als gezogene Maschine ausgebildet, welche sich ihrerseits während des Betriebs auf dem Boden abstützt. Das Injektorgehäuse mit der Übergabekammer und den jeweils in diese einmündenden und üblicherweise koaxial angeordneten Düse und Diffusor ist aus Platzgründen häufig quer zur Fahrtrichtung angeordnet (d.h. die Mittelachse von Düse und Diffusor erstreckt sich senkrecht zur Fahrtrichtung). Darüber hinaus sind insbesondere für große Arbeitsbreiten sogenannte Zwillingsausführungen bekannt, welche je einen zur Aufnahme des Verteilgutes dienenden Behälter sowie je ein pneumatisches Transportsystem der oben beschriebenen Art umfassen. Die Übergabekammer ist in diesem Fall in der Regel parallel zur Fahrtrichtung angeordnet.

Das Injektorgehäuse mit der Übergabekammer sowie Düse und Diffusor von pneumatischen Verteilmaschinen ist einerseits aus Platzgründen, andererseits zur Erzielung eines möglichst geringen Schwerpunktes der Maschine und den Bestrebungen dahingehend, dem Behälter ein möglichst großes Fassungsvermögen zu verleihen, üblicherweise auf einem sehr tiefen Höhenniveau unterhalb des Dosierorgans angeordnet, welches seinerseits unterhalb der Auslauföffnung des das Verteilgut aufnehmenden Behälters positioniert ist. Folglich ist der für eine Probenahme anlässlich einer Abdrehprobe zur Verfügung stehende Raum in der Regel begrenzt, zumal für die Abdrehprobe eine Aufnahmeeinrichtung, wie beispielsweise eine Auffangschale, unterhalb des Dosierorgans bzw. unterhalb der Übergabekammer angeordnet werden muss, um das über einen vorgegebenen Zeitraum mit einer vorgegebenen Einstellung des Dosierorgans auffangen und dessen Masse ermitteln zu können. Um die Arbeitsgänge des Düngens und/oder Säens mit Arbeitsgängen der Bodenbearbeitung platzsparend miteinander kombinieren zu können, sind pneumatische Verteilmaschinen, insbesondere in Form sogenannter Drillmaschinen, zudem häufig mit aktiven oder passiven Bodenbearbeitungsgeräten, wie z.B. Packerwalzen, Kreiseleggen und dergleichen, ausgestattet, was den für eine Abdrehprobe zur Verfügung stehenden Raum zusätzlich einschränkt. Indes ist es für die Abdrehprobe essentiell, dass das gesamte, während ihrer Durchführung dosierte Verteilgut aufgefangen werden kann und nicht etwa Teile desselben in der Übergabekammer und/oder im Mündungsbereich der Düse oder des Diffusors zurückbleiben, um für eine hohe Genauigkeit der Einstellung des Dosierorgans beim späteren Arbeitsgang des Düngens/Säens zu sorgen und auch als "Abdrehfehler" bezeichnete Fehldosierungen, insbesondere Überdosierungen, infolge nur teilweise aufgefangenen Verteilgutes, sowohl aus wirtschaftlichen Gründen als auch aus Umweltschutzgründen zu vermeiden.

Die EP 0 635 195 A1 beschreibt eine pneumatische Verteilmaschine in Form einer Sämaschine, deren sich schräg nach unten erstreckende Übergabekammer im unmittelbaren Anschluss an das Dosierorgan einen nach unten abklappbaren, geneigten Boden aufweist. Der Boden ist in einen Auslaufstutzen einschwenkbar angelenkt, durch welchen das dosierte Verteilgut anlässlich der Durchführung einer Abdrehprobe nach unten in eine untergestellte Aufnahmeeinrichtung in Form eines Auffanggefäßes fallen kann. Nachteilig ist einerseits der für den im Innern des Stutzens angeordneten, schwenkbaren Boden erforderliche konstruktive Aufwand, welcher zudem einer einwandfreien Gasdichtigkeit während des Verteilbetriebs gewährleisten muss; andererseits besitzt die bekannte Ausgestaltung insbesondere einen erhöhten Raumbedarf, weil die Übergabekammer, über deren Ausgestaltung die Druckschrift im Übrigen nichts offenbart, nicht unmittelbar unterhalb des Dosierorgans, sondern seitlich versetzt zu diesem angeordnet werden muss, um für die Zwischenanordnung des mittels des schwenkbaren Bodens verschließbaren Auslaufstutzens für die Probennahme zu sorgen.

Der DE 44 31 288 A1 ist eine weitere pneumatische Verteilmaschine zu entnehmen, bei welcher die Übergabekammer im Wesentlichen unterhalb des Dosierorgans angeordnet ist und insoweit eine relativ raumsparende Anordnung gegeben ist. Die Übergabekammer ist nach unten hin offen ausgestaltet und mittels einer konzentrisch zu der Mittelachse einerseits der in die Übergabekammer mündenden Düse, andererseits des in die Übergabekammer mündenden Diffusors drehbaren Halbschale, welche sich um etwa ein Drittel bis ein Viertel des Umfangs von Düse bzw. Diffusor erstreckt, verschließbar. Während die Übergabekammer anlässlich der Säarbeit mittels der Halbschale verschlossen ist, welche sich in ihrer Schließstellung um die untere Zugangsöffnung der Übergabekammer herum erstreckt und diese verschließt, wird die Halbschale anlässlich der Durchführung einer Abdrehprobe um die Mittelachse von Düse und Diffusor gedreht, so dass sie die untere Zugangsöffnung der Übergabekammer freigibt und ein ausreichender Freiraum verbleibt, damit das bei der Abdrehprobe dosierte Verteilgut zunächst durch den zwischen den Mündungen der Düse und des Diffusors gebildeten Zwischenraum innerhalb der Übergabekammer hindurch und sodann durch die freigegebene Zugangsöffnung in eine unterhalb derselben abgestellte Aufnahmeeinrichtung, wie ein Auffanggefäß, überführt werden kann. Während auch diese Ausgestaltung einen hinreichenden Freiraum unterhalb des Injektors bzw. unterhalb der Übergabekammer zur Probennahme erfordert, besteht ein weiterer Nachteil insbesondere darin, dass ein Teil des während der Abdrehprobe dosierten Verteilgutes in die Mündungen der Düse sowie des Diffusors hineinfallen kann und die aufgefangene Verteilgutmenge folglich nicht der tatsächlich dosierten Verteilgutmenge entspricht, was zu Fehldosierungen - insbesondere zu Überdosierungen - bei der späteren Streu- bzw. Säarbeit führt. Darüber hinaus ist die bekannte Ausgestaltung sowohl in konstruktiver als auch in handhabungstechnischer Hinsicht relativ aufwändig, zumal die drehbare Halbschale während des Betriebs eine einwandfreie Gasdichtigkeit zu gewährleisten hat.

Die EP 2 022 308 A1 sieht bei einer gattungsgemäßen pneumatischen Verteilmaschine zur Durchführung einer Abdrehprobe vor, dass die Übergabekammer an ihrer Unterseite von einer Abdeckung verschlossen ist, welche anlässlich der Abdrehprobe geöffnet werden kann, um das dosierte Verteilgut in eine Aufnahmeeinrichtung, wie ein Auffanggefäß, zu überführen. Um dabei zu verhindern, dass das dosierte Verteilgut in die Mündungen einerseits der Düse, andererseits des Diffusors fällt, ist ein Leitblech vorgesehen, welches in die Übergabekammer derart eingeschoben werden kann, dass es sich oberhalb des Zwischenraumes zwischen der Düse und dem Diffusor sowie unterhalb des Dosierorgans befindet, so dass das dosierte Verteilgut von oben auf das Leitblech und von dort an dem Zwischenraum vorbei durch die geöffnete Abdeckung hindurch in das Auffanggefäß fallen kann. Zu diesem Zweck kann das Leitblech entweder in Axialrichtung von Düse und Diffusor in die Übergabekammer hinein und aus dieser heraus oder wiederum um den Umfang von Düse und Diffusor herum hin und her verschoben werden. Wenngleich sich eine Akkumulation von Verteilgut in den Mündungsbereichen von Düse und Diffusor während der Abdrehprobe auf diese Weise vermeiden lässt, gilt für die Nachteile im Wesentlichen das oben zur DE 44 31 288 A1 gesagte, wobei zunächst auch hier ein hinreichender Freiraum unterhalb des Injektors bzw. unterhalb der Übergabekammer zur Probennahme vonnöten ist. Insbesondere besteht jedoch auch bei dieser Ausgestaltung die Gefahr von Abdrehfehlern, weil ein Teil des während der Abdrehprobe dosierten Verteilgutes auf der Oberseite des Leitblechs liegenbleibt und die aufgefangene Verteilgutmenge folglich wiederum nicht der tatsächlich dosierten Verteilgutmenge entspricht, so dass es zu Fehldosierungen kommen kann. Entsprechend ist auch die in der EP 2 022 308 A1 vorgeschlagene Ausgestaltung sowohl in konstruktiver als auch in handhabungstechnischer Hinsicht relativ aufwändig, zumal das Leitblech in der Betriebsstellung (wenn es also nicht zur Überbrückung des Zwischenraumes zwischen Düse und Diffusor dient) wiederum eine einwandfreie Gasdichtigkeit zu gewährleisten hat.

Aus der DE 10 2007 044 178 A1 ist schließlich eine mit einer zwischen einer Schließstellung und einer zur Probenahme dienenden Öffnungsstellung hin und her verschwenkbaren Leitklappe versehene Übergabekammer einer gattungsgemäßen pneumatischen Verteilmaschine bekannt, welche in ihrer Schließstellung als Außenwand der Übergabekammer dient und in ihrer Probenahmestellung in den Zwischenraum zwischen der Düse und dem Diffusor hineingeklappt wird, so dass das dosierte Verteilgut über den von oben in die Übergabekammer mündenden Auslass des Dosierorgans über die Außenseite der Leitklappe hinweg und von dort in eine Auffangschale fallen kann. Die letztgenannte Lösung erweist sich zwar sowohl konstruktiv als auch handhabungstechnisch als einfach, bequem und kostengünstig und ermöglicht zudem eine fast optimale Ausnutzung des zur Verfügung stehenden Raumes, weil das Verteilgut nicht durch die Unterseite, sondern durch eine der Seitenwände der Übergabekammer herausgeführt wird. Allerdings besteht auch hier die Gefahr einer Anreicherung von dosiertem Verteilgut in den Mündungen von Düse und Diffusor, welche mit den oben beschriebenen Dosierfehlern einhergehen.

Der Erfindung liegt daher die Aufgabe zugrunde, auf konstruktiv einfache und kostengünstige Weise unter zumindest weitestgehender Vermeidung der vorgenannten Nachteile und insbesondere unter zuverlässiger Verhinderung von Abdrehfehlern infolge von während der Abdrehprobe in der Übergabekammer zurückbleibenden Streu- bzw. Saatgutes für eine zuverlässige und reproduzierbare Durchführung von Abdrehproben bei gattungsgemäßen pneumatischen Verteilmaschinen zu sorgen.

Erfindungsgemäß wird diese Aufgabe bei einer einerseits aus einer pneumatischen Verteilmaschine, andererseits aus einer Aufnahmeeinrichtung gebildeten Einheit zur Entnahme einer Probe an Verteilgut der eingangs genannten Art dadurch gelöst, dass
- zumindest ein der Übergabekammer zugewandter Mündungsabschnitt der Düse und/oder des Diffusors der Verteilmaschine zwischen seiner Betriebsposition, in welcher er jeweils in die Übergabekammer mündet, und einer Öffnungsposition, in welcher er zumindest teilweise außerhalb der senkrechten Projektion des Auslasses des Dosierorgans angeordnet ist und die Übergabekammer zumindest von ihrer dem Auslass des Dosierorgans entgegengesetzten Seite her zugänglich macht, hin und her bewegbar ist; und
- die Einlassöffnung der Aufnahmeeinrichtung einen Querschnitt aufweist, welcher wenigstens dem Querschnitt des Auslasses des Dosierorgans entspricht,
   so dass die Aufnahmeeinrichtung derart in die Übergabekammer einführbar ist, dass ihre Einlassöffnung unterhalb des Auslasses des Dosierorgans angeordnet ist, wenn sich zumindest der Mündungsabschnitt der Düse und/oder des Diffusors der Verteilmaschine in seiner Öffnungsposition befindet, um das von dem Dosierorgan der Verteilmaschine dosierte Verteilgut anlässlich einer Probennahme aufzunehmen.

Zur Lösung dieser Aufgabe sieht die Erfindung bei einer pneumatischen Verteilmaschine der eingangs genannten Art ferner vor, dass zumindest ein der Übergabekammer zugewandter Mündungsabschnitt der Düse und/oder des Diffusors zwischen seiner Betriebsposition, in welcher er jeweils in die Übergabekammer mündet, und einer Öffnungsposition, in welcher er zumindest teilweise, insbesondere gänzlich, außerhalb der senkrechten Projektion des Auslasses des Dosierorgans angeordnet ist und die Übergabekammer zumindest von ihrer dem Auslass des Dosierorgans entgegengesetzten Seite her zugänglich macht, hin und her bewegbar ist.

Schließlich schlägt die Erfindung zur Lösung dieser Aufgabe eine Aufnahmeeinrichtung einer Einheit der eingangs genannten Art vor.

Die erfindungsgemäße Ausgestaltung macht zunächst etwaige, innerhalb der Übergabekammer angeordnete, bewegliche Elemente, wie hin und her schwenk- oder schiebbare Leitbleche, Leitklappen und dergleichen, auf welcher das Verteilgut anlässlich einer Abdrehprobe liegen bleiben kann, entbehrlich, so dass sich die Übergabekammer einer erfindungsgemäßen pneumatischen Verteilmaschine sehr einfach und kostengünstig ausbilden lässt und keinerlei Probleme hinsichtlich der geforderten Gasdichtigkeit solcher beweglicher Elemente auftreten. Darüber hinaus stellt die erfindungsgemäße Ausgestaltung insbesondere sicher, dass bei der Durchführung einer Abdrehprobe keine - auch keine sehr geringen - Mengen an dosiertem Verteilgut, wie Dünger und/oder Saatgut, in der Übergabekammer zurückbleiben, sei es an Injektorgehäuseteilen der Übergabekammer selbst oder sei es insbesondere in den Mündungsbereichen der in diese einmündenden Düse oder des in diese einmündenden Diffusors. Dies wird dadurch gewährleistet, dass zumindest der der Übergabekammer zugewandte Mündungsabschnitt der Düse und/oder des Diffusors, insbesondere sowohl der Düse als auch des Diffusors, aus seiner Betriebsstellung in die Öffnungsstellung überführbar ist, in welcher er zumindest teilweise außerhalb der senkrechten Projektion des Auslasses angeordnet ist, so dass der Raum unterhalb des Auslasses des Dosierorgans zugänglich wird, um die Aufnahmeeinrichtung unterhalb des Auslasses des Dosierorgans zu positionieren und die anlässlich einer Abdrehprobe dosierte Menge an Verteilgut vollständig in der Aufnahmeeinrichtung aufzunehmen. Auch geringe Abdrehfehler werden somit sicher und zuverlässig vermieden. Der die Übergabekammer bildende Zwischenraum zwischen der Düse und dem Diffusor der Verteilerleitung wird dabei frei zugänglich, so dass auch bei sehr wenig zur Verfügung stehendem Raum die Abdrehprobe von der Aufnahmeeinrichtung aufgenommen werden kann.

Die erfindungsgemäße Ausgestaltung bietet auch eine sehr einfache und bequeme Durchführung einer Abdrehprobe unter Sicherstellung eines Auffangens des gesamten, probeweise dosierten Verteilgutes, indem die folgenden Maßnahmen vorgenommen werden:
- Bewegen zumindest des der Übergabekammer zugewandten Mündungsabschnittes der Düse und/oder des Diffusors von seiner Betriebsposition in die Öffnungsposition;
- Einführen der Aufnahmeeinrichtung in die Übergabekammer unter Anordnen ihrer Einlassöffnung unterhalb des Auslasses des Dosierorgans;
- Betätigen des Dosierorgans der Verteilmaschine entsprechend dem für die Abdrehprobe gewünschten Massenstrom; und
- Einleiten des dosierten Verteilgutes in die Einlassöffnung der Aufnahmeeinrichtung.

Um für eine bestmögliche Zugänglichkeit der Übergabekammer der pneumatischen Verteilmaschine und somit für ein einfaches und bequemes Einführen der Aufnahmeeinrichtung in diese zu sorgen, ist die Übergabekammer der Verteilmaschine vorzugsweise in der Öffnungsposition zumindest des Mündungsabschnittes der Düse und/oder des Diffusors ferner von wenigstens einer Seite her zugänglich, so dass die Aufnahmeeinrichtung derart seitlich in die Übergabekammer einführbar ist, dass ihre Einlassöffnung unterhalb des Auslasses des Dosierorgans angeordnet ist. Dies gibt insbesondere die Möglichkeit eines Einführens der Aufnahmeeinrichtung von der Seite her bzw. etwa in der Waagrechten, so dass die Übergabekammer mangels einer erforderlichen Zugänglichkeit von unten - oder genauer: eines Einschiebens des Aufnahmeeinrichtung in die Übergabekammer vom Boden her -¨an einer tiefstmöglichen Stelle der pneumatischen Verteilmaschine angeordnet sein kann und somit ein größtmöglicher Bauraum bei einem niedrigen Schwerpunkt zur Verfügung gestellt wird. Wie bereits angedeutet, kann in konstruktiver Hinsicht zu diesem Zweck mit Vorteil vorgesehen sein, dass zumindest der Mündungsabschnitt der Düse und/oder des Diffusors in der Öffnungsposition gänzlich außerhalb der senkrechten Projektion des Auslasses des Dosierorgans angeordnet ist, so dass der gesamte Querschnitt des Auslasses des Dosierorgans für die Aufnahmeeinrichtung zugänglich gemacht werden kann.

In vorteilhafter Ausgestaltung kann ferner insbesondere vorgesehen sein, dass sowohl zumindest der der Übergabekammer zugewandte Mündungsabschnitt der Düse als auch der der Übergabekammer zugewandte Mündungsabschnitt des Diffusors, insbesondere gemeinsam, zwischen der Betriebsposition und der Öffnungsposition hin und her bewegbar sind. Auf diese Weise kann auch dann, wenn der die Übergabekammer bildende Zwischenraum zwischen der Düse und dem Diffusor relativ klein ist bzw. sowohl die Düse als auch der Diffusor sich bis unterhalb des Auslasses des Dosierorgans erstreckt, sichergestellt werden, dass der Auslass des Dosierorgans frei zugänglich wird, um das anlässlich einer Abdrehprobe dosierte Verteilgut in der Aufnahmeeinrichtung auffangen zu können. Dabei kann bzw. können nicht nur jeweils der Mündungsabschnitt der Düse und/oder des Diffusors, sondern kann bzw. können beispielsweise auch die Düse und/oder der Diffusor, vorzugsweise sowohl die Düse als auch der Diffusor, im Wesentlich über ihre gesamte axiale Länge zwischen der Betriebsposition und der Öffnungsposition hin und her bewegbar sein.

Darüber hinaus kann bzw. können vorzugsweise zumindest der Mündungsabschnitt der Düse und/oder des Diffusors über den gesamten Umfang zwischen der Betriebsposition und der Öffnungsposition hin und her bewegbar sein, d.h. der Mündungsabschnitt von Düse und/oder Diffusor ist vollumfänglich hin und her bewegbar. Statt dessen ist es jedoch auch denkbar, dass nur ein Umfangsabschnitt der Düse und/oder des Diffusors, insbesondere ein unterer, sich um wenigstens 120°, vorzugsweise um etwa 180°, erstreckender Umfangsabschnitt der Düse und/oder des Diffusors, zwischen der Betriebsposition und der Öffnungsposition hin und her bewegbar ist bzw. sind, d.h. ein (z.B. oberer) Umfangsabschnitt von Düse und/oder Diffusor ist stationär unterhalb des Dosierorgans angeordnet, während der andere (z.B. untere) Umfangsabschnitt in der Betriebsposition diesem anliegt und zwischen der Betriebsposition und der Öffnungsposition hin und her bewegbar ist.

In vorteilhafter Ausgestaltung kann aus konstruktiven Gründen sowie im Hinblick auf eine einfache Handhabbarkeit die Bewegbarkeit zwischen der Betriebs- und der Öffnungsposition dadurch gewährleistet sein, dass zumindest der der Übergabekammer zugewandte Mündungsabschnitt der Düse und/oder des Diffusors, vorzugsweise sowohl der Düse als auch des Diffusors, zwischen seiner Betriebsposition und seiner Öffnungsposition um eine Schwenkachse schwenkbar ist bzw. sind. Die Schwenkachse kann sich hierbei insbesondere im Wesentlichen horizontal erstrecken und beispielsweise am Umfang des Injektorgehäuses, insbesondere im Wesentlichen auf demselben Höhenniveau wie dessen Mittelachse, angeordnet sein, so dass zum Überführen zumindest des Mündungsabschnittes der Düse und/oder des Diffusors zwischen der betriebs- und Öffnungsposition ein kleinstmöglicher Raumbedarf gegeben ist.

In konstruktiver Hinsicht kann in diesem Zusammenhang mit Vorteil vorgesehen sein, dass sowohl zumindest der der Übergabekammer zugewandte Mündungsabschnitt der Düse als auch zumindest der der Übergabekammer zugewandte Mündungsabschnitt des Diffusors, z.B. auch im Wesentlichen die gesamte Düse und der gesamte Diffusor, gemeinsam zwischen der Betriebsposition und der Öffnungsposition hin und her bewegbar sind, wobei sowohl zumindest der Mündungsabschnitt der Düse als auch zumindest der Mündungsabschnitt des Diffusors an einem zwischen der Betriebsposition und der Öffnungsposition hin und her bewegbaren Wandabschnitt des Injektorgehäuses angeordnet sind. Wird der zumindest die jeweiligen Mündungsabschnitte von Düse und Diffusor - seien es vollumfängliche Mündungsabschnitte oder auch nur Umfangsabschnitte - tragende Wandabschnitt des Injektorgehäuses folglich von seiner Betriebsposition in seine Öffnungsposition bewegt, insbesondere verschwenkt, so wird das Injektorgehäuse entlang einem der Länge dieses Wandabschnittes entsprechenden Axialabschnitt geöffnet, so dass die Übergabekammer unterhalb des Auslasses des Dosierorgans gänzlich frei zugänglich gemacht werden kann. Zu diesem Zweck erstreckt sich der Wandabschnitt des Injektorgehäuses insbesondere um einen Umfang zwischen etwa 120° und etwa 240°, vorzugsweise um etwa 180°, um das Injektorgehäuse herum, so dass der Wandabschnitt beispielsweise einen etwa halbkreisförmigen Querschnitt besitzt. Der Wandabschnitt mit zumindest dem Mündungsabschnitt der Düse und/oder des Diffusors kann hierbei z.B. einerseits im Wesentlichen einstückig, z.B. in Form eines Kunststoffteils, oder auch mehrteilig in Form einer vormontierten Baugruppe, ausgestaltet sein, wobei er zweckmäßigerweise über Dichtflächen verfügt, welche beispielsweise mit Dichtungen aus nachgiebigen, insbesondere elastischen, Dichtungsmaterialien, wie z.B. Gummi, Silikon oder dergleichen, versehen sind, um in der Betriebsstellung, wenn er das Injektorgehäuse verschließt, für die notwendige Gasdichtigkeit zu sorgen.

Der Wandabschnitt des Injektorgehäuses und/oder das Injektorgehäuse selbst, insbesondere sowohl das Injektorgehäuse als auch dessen Wandabschnitt, kann bzw. können ferner in Bezug auf eine die Mittelachse des Injektorgehäuses umfassende Radialebene im Wesentlichen symmetrisch ausgestaltet sein, was die Möglichkeit eröffnet, den Wandabschnitt je nach Anordnung des Dosierorgans der Verteilmaschine wahlweise an zwei entgegengesetzten Seiten an dem Injektorgehäuse anzulenken. Darüber hinaus kann der Wandabschnitt des Injektorgehäuses in der Betriebsposition insbesondere gegen das Injektorgehäuse - oder genauer: gegen den stationären Abschnitt des Injektorgehäuses - verspannbar sein, um in konstruktiv einfacher Weise eine optimale Gasdichtigkeit des hin und her bewegbaren Wandabschnittes während der Streu- bzw. Säarbeit der pneumatischen Verteilmaschine, in welcher er sich in der Betriebsposition befindet und das Injektorgehäuse verschließt, zu garantieren. Der Wandabschnitt kann zu diesem Zweck z.B. mit Befestigungskonsolen ausgestattet sein, welche mit hierzu komplementären (Schnell)spanneinrichtungen zusammenwirken, um den Wandabschnitt in seiner Betriebsposition gegen das Injektorgehäuse zu verspannen. Die Befestigungskonsolen können dabei beispielsweise von Haken oder Klauen gebildet sein, an welchen z.B. ein mittels eines Hebels betätigbarer Spannbügel der (Schnell)spanneinrichtung in der Betriebsposition des Wandabschnittes angreift.

Darüber hinaus kann bzw. können aus Gründen einer einfachen Bedienbarkeit zumindest der der Übergabekammer zugewandte Mündungsabschnitt der Düse und/oder des Diffusors, insbesondere sowohl der Düse als auch des Diffusors, in der Öffnungsposition lösbar feststellbar sein. Dies kann beispielsweise gleichfalls über dieselben oder zusätzliche Befestigungskonsolen der vorgenannten Art geschehen, welche in der Öffnungsposition des Wandabschnittes des Injektorgehäuses jedoch lediglich zum Eingriff eines lösbaren Arretiermittels dienen müssen, um sie in der Öffnungsposition zu halten, solange eine Abdrehprobe durchgeführt werden soll.

Gemäß einer vorteilhaften Weiterbildung der erfindungsgemäßen, aus pneumatischer Verteilmaschine und Aufnahmeeinrichtung gebildeten Einheit kann vorgesehen sein, dass der Übergabekammer der Verteilmaschine eine Schiebeführung zugeordnet ist, und dass die Aufnahmeeinrichtung zu der Schiebeführung komplementäre Führungsmittel aufweist, um die Aufnahmeeinrichtung entlang der Schiebeführung in die Übergabekammer hinein und aus dieser heraus zu schieben, wenn sich zumindest der Mündungsabschnitt der Düse und/oder des Diffusors der Verteilmaschine in seiner Öffnungsposition befindet. Die zueinander komplementären Elemente der Schiebeführung der Verteilmaschine und der Führungsmittel der Aufnahmeeinrichtung gewährleisten einen sehr einfachen Einschub und Auszug der Aufnahmeeinrichtung in die Übergabekammer hinein und aus dieser heraus, wobei sie ferner die Einlassöffnung der Aufnahmeeinrichtung automatisch in die gewünschte Probenahmeposition zu leiten vermögen, in welcher sich die Einlassöffnung der Aufnahmeeinrichtung unterhalb des Auslasses des Dosierorgans befindet. Das Führungsmittel der Aufnahmeeinrichtung kann dabei insbesondere von der Schiebeführung getragen sein, wenn die Aufnahmeeinrichtung in die Übergabekammer eingeschoben worden ist. Auf diese Weise muss die Aufnahmeeinrichtung während der Durchführung der Abdrehprobe nicht manuell festgehalten oder abgestellt werden, sondern ist sie in ihrer für die Abdrehprobe vorgesehenen Position, in welcher sich ihre Einlassöffnung unterhalb des in die Übergabekammer mündenden Auslasses des Dosierorgans befindet, von der Schiebeführung getragen, so dass sichergestellt ist, dass das gesamte dosierte Verteilgut aufgefangen wird.

Zu den vorgenannten Zwecken kann die Schiebeführung der Verteilmaschine dabei insbesondere zwei parallele Profilabschnitte aufweisen, welche in Richtung ihrer einander zugewandten Seiten öffnen, während die Aufnahmeeinrichtung zu den Profilabschnitten im Wesentlichen komplementäre Eingriffsmittel aufweist, deren Abstand etwa dem Abstand der Profilabschnitte entspricht und welche zum Eingriff in die Profilabschnitte ausgebildet sind. Die Eingriffsmittel der Aufnahmeeinrichtung können dabei von separaten Elementen gebildet sein, oder die Führungsmittel können insbesondere zugleich als Eingriffsmittel in die Profilabschnitte der Schiebeführung ausgestaltet sein.

Der Übergabekammer einer erfindungsgemäßen Verteilmaschine ist demnach vorzugsweise eine Schiebeführung zugeordnet, welche z.B. zwei parallele Profilabschnitte aufweisen kann, welche in Richtung ihrer einander zugewandten Seiten öffnen, wie in Form von Profilschienen und/oder in Form von Auflageflächen aufweisenden U-Profilen. Die Schiebeführung einer erfindungsgemäßen Verteilmaschine weist folglich in vorteilhafter Ausgestaltung Auflageflächen auf, welche mit den Eingriffsmitteln bzw. den als Eingriffsmittel ausgebildeten Führungsmitteln der Aufnahmeeinrichtung zusammenwirken, wobei die Schiebeführung insbesondere im Wesentlichen in Form von U-Profilen ausgebildet sein kann, wie beispielsweise in Form von "liegenden" U-Profilschienen, deren freie Enden der U-Schenkel einander zugewandt sind.

In diesem Zusammenhang kann in konstruktiver Hinsicht vorgesehen sein, dass zumindest der der Übergabekammer zugewandte Mündungsabschnitt der Düse und/oder des Diffusors, welche(r) zwischen der Betriebsposition und der Öffnungsposition hin und her bewegbar ist bzw. sind, insbesondere zumindest der der Übergabekammer zugewandte Mündungsabschnitt sowohl der Düse als auch des Diffusors, in Axialrichtung zwischen den beiden Profilabschnitten der Schiebeführung angeordnet ist bzw. sind.

Die Schiebeführung kann dabei beispielsweise an der Unterseite des Injektorgehäuses und somit stationär angeordnet sein. Wie bereits angedeutet, kann die Schiebeführung ferner insbesondere in einer im Wesentlichen horizontalen Ebene angeordnet sein, um ein seitliches Ein- und Ausschieben der Aufnahmeeinrichtung in die bzw. aus der Übergabekammer zu ermöglichen und dabei einen zusätzlichen Bauraum unterhalb der Übergabekammer bzw. unterhalb des Injektorgehäuses weitestgehend entbehrlich zu machen. Die Schiebeführung erstreckt sich folglich vorzugsweise im Wesentlichen senkrecht zur Mittelachse sowohl der Düse als auch des Diffusors sowie ferner vorzugsweise in einer im Wesentlichen horizontalen Ebene.

Was schließlich die Aufnahmeeinrichtung betrifft, so kann an dem der Einlassöffnung entgegengesetzten Ende ihres Einlassabschnittes zweckmäßigerweise eine Sammeleinrichtung für das Verteilgut, wie beispielsweise ein Auffangsack, ein Behälterteil oder dergleichen, insbesondere lösbar, befestigt sein.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Teilansicht einer Ausführungsform einer pneumatischen Verteilmaschine, welche im vorliegenden Fall als eine zum Anbau auf einem aktiven oder passiven Bodenbearbeitungsgerät vorgesehene pneumatische Sämaschine ausgebildet ist;
- Fig. 2: eine schematische perspektivische Detailansicht des unterhalb des Dosierorgans angeordneten Injektorgehäuses der Verteilmaschine gemäß Fig. 1 mit der Übergabekammer und den in diese einmündenden Düse und Diffusor in deren Betriebsposition, d.h. mit geschlossenem Injektorgehäuse;
- Fig. 3: eine der Fig. 2 entsprechende Detailansicht ohne das Dosierorgan mit der Düse und dem Diffusor in deren Öffnungsposition, in welcher ein sie tragender Wandabschnitt des Injektorgehäuses in die Öffnungsposition bewegt worden ist, von schräg oben, um eine Abdrehprobe vornehmen zu können;
- Fig. 4: eine der Fig. 3 entsprechende Detailansicht des in der Öffnungsposition befindlichen Wandabschnittes des Injektorgehäuses mit Düse und Diffusor von schräg unten;
- Fig. 5: eine schematische, teilweise geschnitten dargestellte Seitenansicht des Injektorgehäuses mit der Übergabekammer der Verteilmaschine sowie der Düse und dem Diffusor in der Betriebsposition entsprechend der Fig. 2, aber ohne das Dosierorgan;
- Fig. 6: einen schematischen Querschnitt durch das Injektorgehäuse der Verteilmaschine entsprechend der Schnittebene VI-VI gemäß Fig. 5;
- Fig. 7: eine schematische, teilweise geschnitten dargestellte Seitenansicht des Injektorgehäuses mit der Übergabekammer der Verteilmaschine sowie der Düse und dem Diffusor in der Öffnungsposition entsprechend den Fig. 3 und 4;
- Fig. 8: einen schematischen Querschnitt durch das Injektorgehäuse der Verteilmaschine entsprechend der Schnittebene VIII-VIII gemäß Fig. 7;
- Fig. 9: eine schematische perspektivische Detailansicht des Injektorgehäuses gemäß Fig. 2 bis 8 mit hieran angeordnetem Träger der Dosiereinheit und Schiebeführung;
- Fig. 10: eine schematische perspektivische Detailansicht des hin und her bewegbaren Wandabschnittes des Injektorgehäuses mit Düse und Injektor;
- Fig. 11: eine schematische perspektivische Ansicht einer Ausführungsform einer Aufnahmeeinrichtung zur Aufnahme des anlässlich einer Abdrehprobe dosierten Verteilgutes;
- Fig. 12: eine schematische Seitenansicht der Aufnahmeeinrichtung gemäß Fig. 11;
- Fig. 13: eine schematische Seitenansicht der Aufnahmeeinrichtung gemäß Fig. 11 und 12 in Richtung des Pfeils XIII der Fig. 12 betrachtet;
- Fig. 14: eine im Wesentlichen den Fig. 3 und 4 entsprechende schematische Detailansicht des unterhalb des Auslasses des Dosierorgans angeordneten Injektorgehäuses der Verteilmaschine mit geöffnetem Wandabschnitt desselben und der Aufnahmeeinrichtung gemäß Fig. 11 bis 13 vor dem Einschieben derselben in die Übergabekammer;
- Fig. 15: eine der Fig. 14 entsprechende Detailansicht, nachdem die Aufnahmeeinrichtung in die Übergabekammer bis unmittelbar unterhalb des Auslasses des Dosierorgans eingeschoben worden ist und sich in ihrer zur Durchführung einer Abdrehprobe vorgesehenen Position befindet;
- Fig. 16: eine schematische Schnittansicht durch die in die Übergabekammer eingeschobene Aufnahmeeinrichtung entsprechend deren in Fig. 15 wiedergegebenen, zur Durchführung einer Abdrehprobe vorgesehenen Position entlang einer der Fig. 8 entsprechenden Schnittebene; und
- Fig. 17: eine schematische Seitenansicht der in die Übergabekammer eingeschobene Aufnahmeeinrichtung entsprechend deren in Fig. 15 und 16 wiedergegebenen, zur Durchführung einer Abdrehprobe vorgesehenen Position aus einer der Fig. 7 entsprechenden Blickrichtung.

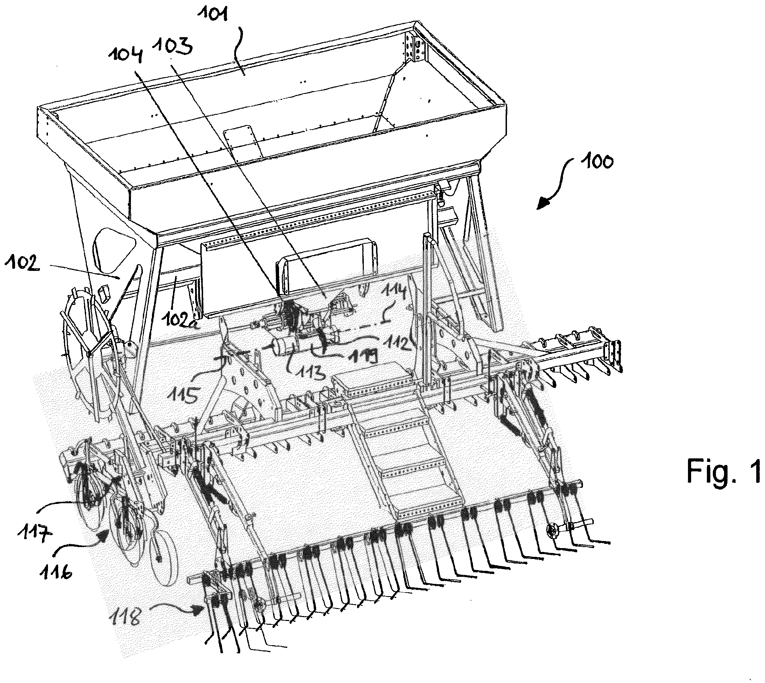

In Fig. 1 ist eine insgesamt mit dem Bezugszeichen 100 versehene pneumatische Verteilmaschine schematisch wiedergegeben, welche beim vorliegenden Ausführungsbeispiel von einer pneumatischen Sämaschine gebildet und beispielsweise an den Dreipunkt-Kraftheber am Heck einer Zugmaschine (nicht dargestellt), wie eines Traktors, ankoppelbar ist. Die Verteilmaschine 100 umfasst einen Behälter 101 zur Aufnahme von Verteilgut, wie z.B. Dünger oder insbesondere Saatgut, welcher von einem Rahmen 102 getragen ist. Der Behälter 101 umfasst sich etwa trichterförmig nach unten verjüngende Seitenwände, an deren unterem, in Fig. 1 nicht erkennbarem Ende ein Auslaufschacht 103 angeordnet ist, welcher beispielsweise mit einem in Fig. 1 ebenfalls nicht erkennbaren Rührwerk ausgestattet ist und von oben in ein Dosierorgan 104 führt. Mittels des Rahmens 102 einschließlich einer oder mehrerer Quertraversen 102a desselben ist der Behälter 101 auf einem nicht wiedergegebenen, aktiven oder passiven Bodenbearbeitungsgerät aufgesetzt.

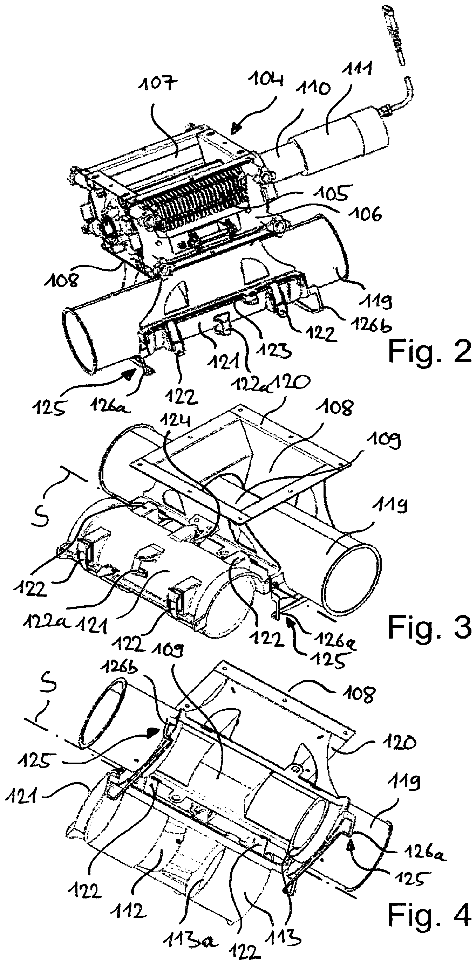

Wie insbesondere der Fig. 2 zu entnehmen ist, umfasst das Dosierorgan 104 im vorliegenden Fall ein - hier um eine Achse senkrecht zur Fahrtrichtung umlaufendes - Nocken- oder Zellenrad 105, welches in einem Dosiergehäuse 106 gelagert ist, dessen (oberer) Einlass 107 mit dem Auslaufschacht 103 des Behälters 101 (Fig. 1) und dessen (unterer) Auslass 108 in ein weiter unten im Einzelnen erläutertes Injektorgehäuse 119 mündet, in welchem eine Übergabekammer 109 (vgl. Fig. 4 und 5 bis 8) untergebracht ist. Das Nocken- oder Zellenrad 105 des Dosierorgans 104 sitzt auf einer Antriebswelle 110, welche über einen Getriebemotor 111 mit einer dem gewünschten Verteilgutstrom entsprechenden Drehzahl Steuer- und/oder regelbar angetrieben ist.

Wie weiterhin den Fig. 1 und insbesondere den Fig. 4, 5 und 10 zu entnehmen ist, befindet sich in dem unterhalb des Dosierorgans 104 angeordneten Injektorgehäuse 119 der Injektor der Verteilmaschine 100, welcher im vorliegenden Fall quer zur Fahrtrichtung angeordnet ist und einerseits eine Düse 112, andererseits eine nach Art einer Expansionsdüse ausgestalteten Diffusor 113 umfasst, welche koaxial und senkrecht zur Fahrtrichtung der Verteilmaschine 100 am tiefsten Punkt derselben angeordnet sind. In dem Zwischenraum zwischen der Düse 112 und dem Diffusor 113 befindet sich die Übergabekammer 109. Während die Düse 112 an dem in Fig. 1 rechten Ende des Injektorgehäuses 119 über eine Blasluftleitung 114 an ein aus Veranschaulichungsgründen in Fig. 1 nicht dargestelltes Gebläse angeschlossen ist, schließt sich an den Diffusor 113 an dem in Fig. 1 linken Ende des Injektorgehäuses 119 eine Versorgungs- bzw. Förderleitung 115 an. Das Injektorgehäuse 119 besitzt dabei beispielsweise im Wesentlichen die Form eines Rohrabschnittes, an welchen einerseits die Blasluftleitung 114, andererseits die Versorgungs- bzw. Förderleitung 115 angeschlossen ist.

Auf diese Weise wird das Verteilgut in der Übergabekammer 109 mittels des über die Düse 112 einströmenden Gasstroms in den Diffusor 113 überführt und gelangt von dort in die Verteilerleitung 115. Letztere führt an einen in Fig. 1 wiederum aus Veranschaulichungsgründen gleichfalls nicht wiedergegebenen Verteilerkopf mit einer Mehrzahl an um seinen Umfang verteilt angeordneten Anschlüssen, an welche je eine Verteilerleitung (ebenfalls nicht gezeigt) angeschlossen ist. Jede Verteilerleitung ist im Wesentlichen zur Seite sowie nach unten und hinten geführt und führt an ihrem freien, dem Verteilerkopf 9 abgewandten Ende zu je einem Verteilorgan 116, von welchen nur eines exemplarisch gezeigt ist. Im Falle der in Fig. 1 beispielhaft wiedergegebenen pneumatischen Sämaschine handelt es sich bei den Verteilorganen 116 um Säscharen, welche beispielsweise in Form von Scheibenscharen ausgebildet sind und in als solcher bekannter Weise ein Traggestänge 117 aufweisen, welches mittels geeigneter Befestigungseinrichtungen lösbar an dem Rahmen 102 der Verteilmaschine 100 festlegbar ist. Die Säscharen 116 umfassen beispielsweise in üblicher Weise je eine Scharscheibe sowie eine dieser nachgeordnete Andruckrolle, welche sich - in Fahrtrichtung der Verteilmaschine 100 betrachtet - etwa in Flucht mit der Scharscheibe befindet. Den Säscharen 116 können darüber hinaus Zustreicheinrichtungen 118 nachgeordnet sein, welche eine Mehrzahl an Zustreichwerkzeugen - die sogenannten Striegel - umfassen.

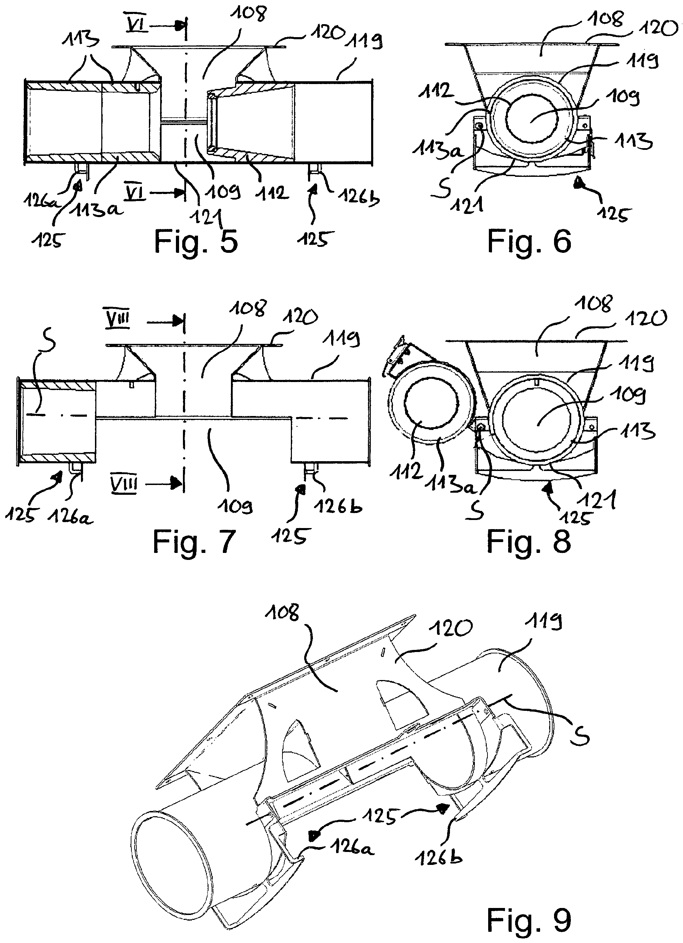

Wie insbesondere aus den Fig. 4 und 5 hervorgeht, sind die innerhalb des Injektorgehäuses angeordneten Mündungen einerseits der Düse 112, andererseits des Diffusors 113 mit Abstand voneinander angeordnet, wobei zwischen den einander zugewandten Mündungen der Düse 112 und des Diffusors 113 die Übergabekammer 109 angeordnet ist. Wie am besten der Fig. 5 zu entnehmen ist, ist die Übergabekammer 109 in der Betriebsposition von Düse 112 und Diffusor 113 umfangsseitig verschlossen, wobei das Injektorgehäuse 119 zwischen den die Übergabekammer 109 begrenzenden Düse 112 und Diffusor 113 nach oben hin offen ist, um die Übergabekammer 109 mit dem Auslass 108 des Dosierorgans 104 zu verbinden, welches im vorliegenden Fall beispielsweise an einem Grundrahmen 120 befestigt ist, welcher an dem Injektorgehäuse 119 festgelegt ist.

Wie vornehmlich einerseits aus den Fig. 2, 5 und 6, andererseits aus den Fig. 3, 4, 7 und 8 ersichtlich, ist einerseits die Düse 112, andererseits ein der Düse 112 bzw. der Übergabekammer 109 zugewandter Mündungsabschnitt 113a des Diffusors 113 zwischen seiner in Fig. 2, 5 und 6 wiedergegebenen Betriebsposition, in welcher sowohl die Düse 112 als auch der Diffusor 113 mittels seines Mündungsabschnittes 113a in die Übergabekammer 109 einmündet (und der Auslass 108 des Dosierorgans 104 von oben in die Übergabekammer 109 einmündet), und einer Öffnungsposition gemäß Fig. 3, 4, 7 und 8, in welcher er - im vorliegenden Fall gänzlich - außerhalb der senkrechten Projektion des Auslasses 108 des Dosierorgans 104 angeordnet ist und die Übergabekammer 109 sowohl von ihrer dem Auslass 108 des Dosierorgans 104 entgegengesetzten (unteren) Seite als auch von der Seite her zugänglich macht, hin und her bewegbar. Dies ist bei dem gezeigten Ausführungsbeispiel dadurch gewährleistet, dass sowohl die Düse 112 als auch der dieser bzw. der Übergabekammer 109 zugewandte Mündungsabschnitt 113a des Diffusors 113 an einem zwischen ihrer Betriebsposition (Fig. 2, 5 und 6) und ihrer Öffnungsposition (Fig. 3, 4, 7 und 8) hin und her bewegbaren Wandabschnitt 121 des Injektorgehäuses 119 angeordnet sind, welcher sich beispielsweise um einen Umfangsbereich von etwa 180° um die untere Hälfte des Injektorgehäuses 119 erstreckt und folglich einen etwa halbkreisförmigen Querschnitt besitzt, wobei seine axiale Länge insbesondere derart bemessen ist, dass er länger ist als der in die Übergabekammer 109 mündende Auslass 108 des Dosierorgans 104. Die Hin- und Herbewegbarkeit des sowohl die Düse 112 als auch den Mündungsabschnitt 113a des Diffusors 113 tragenden Wandabschnittes 121 des Injektorgehäuses 119 ist vorzugsweise dadurch sichergestellt, dass der Wandabschnitt 121 um eine - hier horizontale - Schwenkachse S schwenkbar an dem Injektorgehäuse 119 angelenkt ist, wobei die Schwenkachse S im vorliegenden Fall am Umfang des Injektorgehäuses 119 parallel zu dessen Mittelachse und etwa auf demselben Höhenniveau wie letztere angeordnet ist.

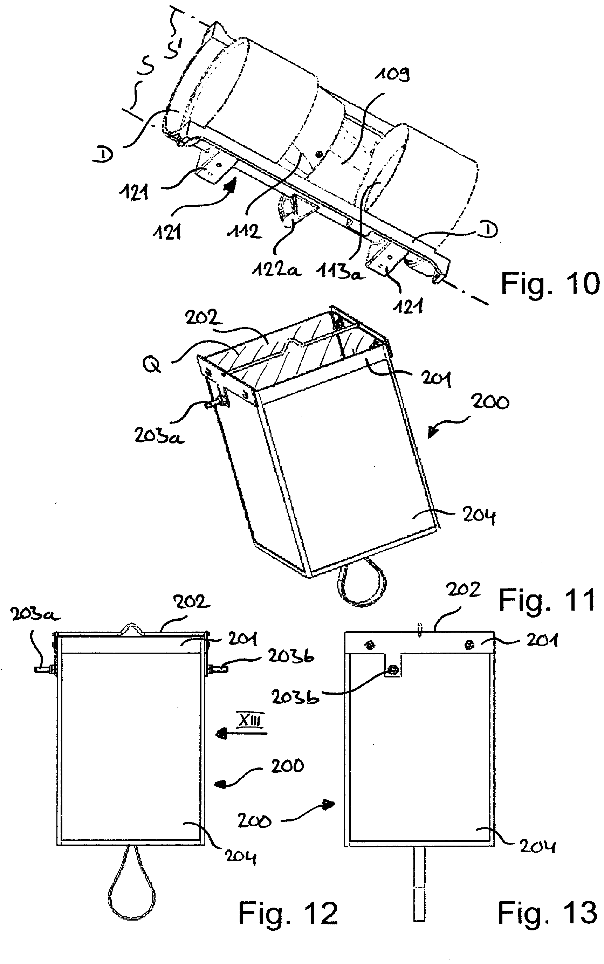

Während die Fig. 9 nochmals eine Detailansicht des Injektorgehäuses 119 einschließlich des hieran festgelegten Grundrahmens 120 des Dosierorgans 104 (vgl. Fig. 2) zeigt, ist in der Fig. 10 nochmals eine Detailansicht des Wandabschnittes 121 des Injektorgehäuses 119 wiedergegeben, welches die Düse 112 und den dieser zugewandten Mündungsabschnitt 113a des Diffusors 113 - beim vorliegenden Ausführungsbeispiel jeweils um deren gesamten Umfang - trägt, welche zwischen sich die Übergabekammer 109 begrenzen. Wie dort erkennbar, ist der Wandabschnitt 121 des Injektorgehäuses 119 in Bezug auf eine dessen Mittelachse umfassende Radialebene im Wesentlichen symmetrisch ausgestaltet, was die Möglichkeit eröffnet, ihn wahlweise an zwei Seiten des Injektorgehäuses 119 anzulenken, nämlich einerseits an der Schwenkachse S, andererseits an der Schwenkachse S' (Fig. 10). Dementsprechend ist zu diesem Zweck das Injektorgehäuse 119 in Bezug auf dieselbe, dessen Mittelachse umfassende Radialebene im Wesentlichen symmetrisch ausgestaltet, wobei an zwei entgegengesetzten Seiten seines Umfangs einerseits die Schwenkachse S, andererseits die - in der Fig. 9 nicht erkennbare, da verdeckte - optionale weitere Schwenkachse S' angeordnet ist.

In der Fig. 10 sind überdies sich um den dem Injektorgehäuse 119 zugewandten Umfangsbereich des Wandabschnittes 121 erstreckende Dichtflächen D erkennbar, welche beispielsweise mit geeigneten Dichtungsmaterialien (nicht gezeigt) versehen sein können, um in der Betriebsstellung, wenn der Wandabschnitt 121 das Injektorgehäuse 119 verschließt, für die notwendige Gasdichtigkeit zu sorgen.

Um eine einwandfreie Gasdichtigkeit des Injektorgehäuses 119 sicherzustellen, kann der Wandabschnitt 121 des Injektorgehäuse 119 ferner in der Betriebsposition an dem Injektorgehäuse 119 verspannbar sein. Zu diesem Zweck sind beim vorliegenden Ausführungsbeispiel am Außenumfang des Wandabschnittes 121 angebrachte Befestigungskonsolen 122 vorgesehen (vgl. insbesondere Fig. 3, 5 und 10), welche z.B. nach Art von Haken, Klauen oder dergleichen ausgestaltet sein können und welche mit einer hierzu komplementären Spanneinrichtung 123 (vgl. Fig. 1), insbesondere in Form einer Schnellspanneinrichtung, zusammenwirken, um den Wandabschnitt 121 in seiner Betriebsposition gegen das Injektorgehäuse 119 zu verspannen. Die Spanneinrichtung 123 umfasst im vorliegenden Fall einen, z.B. mittels Hebel betätigbaren Spannbügel, welcher am Außenumfang des Injektorgehäuses 119 angeordnet ist und in der Schließstellung bzw. in der Betriebsposition des Wandabschnittes 121 an dessen Befestigungskonsolen 122 angreift. Darüber hinaus ist zwecks einer einfachen Durchführung einer Abdrehprobe der die Düse 112 und den Mündungsabschnitt 113a des Diffusors 113 tragende Wandabschnitt 121 auch in der Öffnungsposition vorzugsweise lösbar feststellbar. Dies kann beispielsweise gleichfalls über dieselben oder zusätzliche Befestigungskonsolen 122a, z.B. wiederum nach Art von Haken oder Ösen, geschehen, welche in der Öffnungsposition des Wandabschnittes 121 des Injektorgehäuses 119 jedoch lediglich zum Eingriff eines, z.B. am Außenumfang des Injektorgehäuses 119 angebrachten, lösbaren Arretiermittels, z.B. in Form eines in die zusätzlichen Befestigungskonsole 122a einrastenden Zapfens, dienen müssen, um den Wandabschnitt 121 in der Öffnungsposition zu halten, solange eine Abdrehprobe durchgeführt werden soll (vgl. insbesondere die Fig. 3).

Wie am besten in der Fig. 9, aber auch in den Fig. 2 bis 5 und 7 erkennbar, ist der zwischen der Düse 112 und dem Diffusor 113 angeordneten und unterhalb des Auslasses 108 des Dosierorgans 104 befindlichen Übergabekammer 109 ferner eine Schiebeführung 125 zugeordnet, welche um vorliegenden Fall an der Unterseite des Injektorgehäuses 119 angeordnet ist und sich in einer etwa horizontalen Ebene senkrecht zur Mittelachse des Injektorgehäuses 119 bzw. der Düse 112 sowie des Diffusors 113 erstreckt. Die Schiebeführung 125 umfasst im vorliegenden Fall zwei parallele Profilabschnitte 126a, 126b, welche im Wesentlichen in Form von Profilschienen ausgebildet sind und jeweils ein U-Profil besitzen. Die Profilabschnitte 126a, 126b sind beispielsweise beidseitig des schwenkbaren Gehäuseabschnittes 121 stationär an dem Injektorgehäuse 119 festgelegt, so dass sich der Gehäuseabschnitt 121 mit der Düse 112 und dem Mündungsabschnitt 113a des Diffusors 113 in Axialrichtung zwischen diesen befindet. Die U-Profile der Profilabschnitte 126a, 126b sind dabei liegend angeordnet, und zwar derart, dass ihre U-Profile in Richtung ihrer einander zugewandten Seiten öffnen, d.h. die U-Schenkel der U-Profile sind einander zugewandt, während die U-Stege einander abgewandt sind. Der untere U-Schenkel des U-Profils eines jeweiligen Profilabschnittes 126a, 126b bildet auf diese Weise eine innenseitig des U-Profils angeordnete Auflagefläche, um eine nachfolgend unter Bezugnahme auf die Fig. 11 bis 13 erläuterte Aufnahmeeinrichtung 200 zum Auffangen des gesamten, anlässlich einer Abdrehprobe mittels des Dosierorgans 104 dosierten Streu- bzw. Saatgutes nicht nur bis unmittelbar unterhalb des Auslasses 108 des Dosierorgans 104 in die Übergabekammer 104 einzuführen, wenn sich der Wandabschnitt 121 des Injektorgehäuses 119 mit der Düse 112 und dem Mündungsabschnitt 113a des Diffusors 113 in der Öffnungsposition befindet, sondern auch dort zu halten bzw. zu tragen.

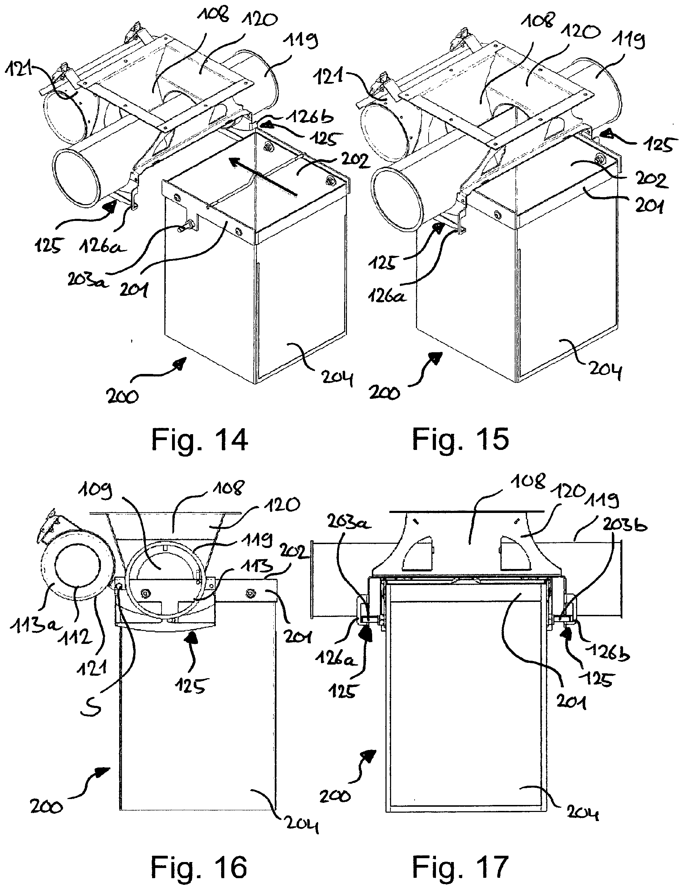

In den Fig. 11 bis 13 ist eine solche Aufnahmeeinrichtung 200 zur Aufnahme einer Probe an Streu- bzw. Saatgut schematisch wiedergegeben. Wie dort erkennbar, weist die Aufnahmeeinrichtung 200 einen Einlassabschnitt 201 auf, dessen oberes, freies Ende mit einer Einlassöffnung 202 für das anlässlich einer Abdrehprobe dosierte Verteilgut versehen ist. Der Einlassabschnitt 201 umfasst dabei einen - hier z.B. rechteckigen bzw. quadratischen - Rahmen, welcher die Einlassöffnung 202 begrenzt. Zumindest der Einlassabschnitt 201 der Aufnahmeeinrichtung 200 weist dabei einen - in Fig. 11 strichliniert gekennzeichneten - Querschnitt Q auf, welcher einerseits wenigstens dem Querschnitt des Auslasses 108 des Dosierorgans 104 entspricht (vgl. insbesondere auch die Fig. 15 bis 17), und welcher andererseits derart an die Abmessungen des mit der Düse 112 und dem Mündungsabschnitt 113a des Diffusors 113 versehenen Wandabschnitt 121 des Injektorgehäuses 119 angepasst ist, dass die Aufnahmeeinrichtung 200 mit ihrer Einlassöffnung 202 bis unterhalb des Auslasses 108 des Dosierorgans 104 in die Übergabekammer 108 einführbar ist, wenn der Wandabschnitt 121 mit der Düse 112 und dem Mündungsabschnitt 113a des Diffusors 113 in die Öffnungsposition verschwenkt worden ist.

Die Aufnahmeeinrichtung 200 weist ferner zu der Schiebeführung 125 des Injektorgehäuses 119 komplementäre Führungsmittel 203a, 203b auf, um die Aufnahmeeinrichtung 200 entlang der Schiebeführung 125 in die Übergabekammer 109 hinein und aus dieser heraus zu schieben, wie dies insbesondere in den Fig. 14 bis 17 dargestellt ist. Die Führungsmittel 203a, 203b, welche im vorliegenden Fall von Zapfen gebildet sind, aber auch eine beliebige andersartige, mit der Schiebeführung 125 zusammenwirkende Ausgestaltung besitzen können, z.B. nach Art von mit der Schiebeführung 125 zusammenwirkenden Führungsleisten (nicht gezeigt) oder dergleichen ausgebildet sein können, sind infolge Eingriffs in die U-Profile der Profilabschnitte 126a, 126b der Schiebeführung 125 von letzterer getragen, wenn die Aufnahmeeinrichtung 200 in die Übergabekammer 109 eingeschoben worden ist, so dass die Aufnahmeeinrichtung 200 während der Durchführung einer Abdrehprobe nicht manuell festgehalten werden muss. Die - hier zapfenförmigen - Führungsmittel 203a, 203b der Aufnahmeeinrichtung 200 dienen folglich zugleich als Eingriffsmittel in die Schiebeführung 125, wobei sie in Bezug auf die beiden parallelen Profilabschnitte 126a, 126b der Schiebeführung 125 komplementär sind und ihr Abstand etwa dem Abstand der Profilabschnitte 126a, 126b entspricht, mit welchen sie auf diese Weise in Eingriff bringbar sind.

Wie den Fig. 14 bis 17 zu entnehmen ist, lässt sich der Einlassabschnitt 201 der Aufnahmeeinrichtung 200 auf diese Weise - wenn der Wandabschnitt 121 des Injektorgehäuses 119 einschließlich der von dem Wandabschnitt 121 getragenen Düse 112 und dem Mündungsabschnitt 113a des Injektors 113 in die Öffnungsposition verschwenkt worden ist - in die Übergabekammer 109 derart einschieben, dass sich die Einlassöffnung 202 der Aufnahmeeinrichtung 200 unmittelbar unterhalb des Auslasses 108 des Dosierorgans 104 (in den Fig. 14 bis 17 nicht nochmals gezeigt) befindet. Folglich gelangt das Verteilgut während der Durchführung einer Abdrehprobe aus dem Auslass 108 des Dosierorgans 104 direkt in die unterhalb desselben angeordnete Einlassöffnung 202 des Einlassabschnittes 201 der Aufnahmeeinrichtung 200, ohne dass auch nur ein kleiner Teil des dosierten Verteilgutes in die Mündungen der Düse 112 bzw. des Diffusors 113 zu fallen vermag und es hierdurch zu Abdrehfehlern kommt.

Die Aufnahmeeinrichtung 200 kann im Übrigen zweckmäßigerweise an ihrem der Einlassöffnung 202 entgegengesetzten (unteren) Ende des Einlassabschnittes 201 mit einer Sammeleinrichtung 204 für das anlässlich einer Abdrehprobe dosierte Verteilgut ausgestattet sein, wie beispielsweise einem formhaltigen Behälter, einem Sack oder dergleichen, welcher beim vorliegenden Ausführungsbeispiel an dem Einlassabschnittes 201, insbesondere lösbar, festgelegt ist.

## Patentansprüche

1. Einheit zur Entnahme einer Probe an Verteilgut, wie Saatgut und/oder Dünger, aus einer Verteilmaschine (100), umfassend
(a) eine pneumatische Verteilmaschine (100) mit wenigstens einem Dosierorgan (104) und einem unterhalb eines Auslasses (108) des Dosierorgans (104) angeordneten Injektorgehäuse (119), in welchem eine Übergabekammer (109) untergebracht ist, in welche einerseits eine an ein Gebläse anschließbare Düse (112), andererseits ein an wenigstens eine Versorgungsleitung (115) anschließbarer Diffusor (113) mündet, wobei die Mündung der Düse (112) mit Abstand von der Mündung des Diffusors (113) angeordnet ist; und
(b) wenigstens eine Aufnahmeeinrichtung (200) zur Aufnahme der Probe des mittels des wenigstens einen Dosierorgans (104) der Verteilmaschine (100) dosierten Verteilgutes, wobei die Aufnahmeeinrichtung (200) wenigstens eine Einlassöffnung (202) für das Verteilgut aufweist,
**dadurch gekennzeichnet, dass**
- zumindest ein der Übergabekammer (109) zugewandter Mündungsabschnitt der Düse (112) und/oder des Diffusors (113) der Verteilmaschine (100) zwischen seiner Betriebsposition, in welcher er jeweils in die Übergabekammer (109) mündet, und einer Öffnungsposition, in welcher er zumindest teilweise außerhalb der senkrechten Projektion des Auslasses (108) des Dosierorgans (104) angeordnet ist und die Übergabekammer (109) zumindest von ihrer dem Auslass (108) des Dosierorgans (104) entgegengesetzten Seite her zugänglich macht, hin und her bewegbar ist; und
- die Einlassöffnung (202) der Aufnahmeeinrichtung (200) einen Querschnitt (Q) aufweist, welcher wenigstens dem Querschnitt des Auslasses (108) des Dosierorgans (104) entspricht,
so dass die Aufnahmeeinrichtung (200) derart in die Übergabekammer (109) einführbar ist, dass ihre Einlassöffnung (202) unterhalb des Auslasses (108) des Dosierorgans (104) angeordnet ist, wenn sich zumindest der Mündungsabschnitt der Düse (112) und/oder des Diffusors (113) der Verteilmaschine (100) in seiner Öffnungsposition befindet, um das von dem Dosierorgan (104) der Verteilmaschine (100) dosierte Verteilgut anlässlich einer Probennahme aufzunehmen.

2. Einheit nach Anspruch 1, **dadurch gekennzeichnet, dass** die Übergabekammer (109) der Verteilmaschine (100) in der Öffnungsposition zumindest des Mündungsabschnittes der Düse (112) und/oder des Diffusors (113) ferner von wenigstens einer Seite her zugänglich ist, so dass die Aufnahmeeinrichtung (200) derart seitlich in die Übergabekammer (109) einführbar ist, dass ihre Einlassöffnung (202) unterhalb des Auslasses (108) des Dosierorgans (104) angeordnet ist.

3. Einheit nach Anspruch 2, **dadurch gekennzeichnet, dass** der Übergabekammer (109) der Verteilmaschine (100) eine Schiebeführung (125) zugeordnet ist, und dass die Aufnahmeeinrichtung (200) zu der Schiebeführung (125) komplementäre Führungsmittel (203a, 203b) aufweist, um die Aufnahmeeinrichtung (200) entlang der Schiebeführung (125) in die Übergabekammer (109) hinein und aus dieser heraus zu schieben, wenn sich zumindest der Mündungsabschnitt der Düse (112) und/oder des Diffusors (113) der Verteilmaschine (100) in seiner Öffnungsposition befindet, wobei das Führungsmittel (203a, 203b) der Aufnahmeeinrichtung (200) insbesondere von der Schiebeführung (125) getragen ist, wenn die Aufnahmeeinrichtung (200) in die Übergabekammer (109) eingeschoben worden ist.

4. Einheit nach Anspruch 3, **dadurch gekennzeichnet, dass** die Schiebeführung (125) der Verteilmaschine (100) zwei parallele Profilabschnitte (126a, 126b) aufweist, welche in Richtung ihrer einander zugewandten Seiten öffnen, und dass die Aufnahmeeinrichtung (200) zu den Profilabschnitten (126a, 126b) im Wesentlichen komplementäre Eingriffsmittel aufweist, deren Abstand etwa dem Abstand der Profilabschnitte (126a, 126b) entspricht und welche zum Eingriff in die Profilabschnitte (126a, 126b) ausgebildet sind, wobei die Eingriffsmittel der Aufnahmeeinrichtung (200) insbesondere von deren Führungsmitteln (203a, 203b) gebildet sind.

5. Pneumatische Verteilmaschine (100), welche zur Entnahme einer Probe an Verteilgut, wie Saatgut und/oder Dünger, ausgebildet ist, insbesondere einer Einheit nach einem der Ansprüche 1 bis 4, mit wenigstens einem Dosierorgan (104) und einem unterhalb eines Auslasses (108) des Dosierorgans (104) angeordneten Injektorgehäuse (119), in welchem eine Übergabekammer (109) untergebracht ist, in welche einerseits eine an ein Gebläse anschließbare Düse (112), andererseits ein an wenigstens eine Versorgungsleitung (115) anschließbarer Diffusor (113) mündet, wobei die Mündung der Düse (112) mit Abstand von der Mündung des Diffusors (113) angeordnet ist, **dadurch gekennzeichnet, dass** zumindest ein der Übergabekammer (109) zugewandter Mündungsabschnitt der Düse (112) und/oder des Diffusors (113) zwischen seiner Betriebsposition, in welcher er jeweils in die Übergabekammer (109) mündet, und einer Öffnungsposition, in welcher er zumindest teilweise, insbesondere gänzlich, außerhalb der senkrechten Projektion des Auslasses (108) des Dosierorgans (104) angeordnet ist und die Übergabekammer (109) zumindest von ihrer dem Auslass (108) des Dosierorgans (104) entgegengesetzten Seite her zugänglich macht, hin und her bewegbar ist.

6. Verteilmaschine nach Anspruch 5, **dadurch gekennzeichnet, dass**.
- sowohl zumindest der der Übergabekammer (109) zugewandte Mündungsabschnitt der Düse (112) als auch der der Übergabekammer (109) zugewandte Mündungsabschnitt (113a) des Diffusors (113), insbesondere gemeinsam, und/oder
- die Düse (112) und/oder der Diffusor (113) im Wesentlichen über die gesamte axiale Länge
zwischen der Betriebsposition und der Öffnungsposition hin und her bewegbar ist bzw. sind.

7. Verteilmaschine nach Anspruch 5 oder 6, **dadurch gekennzeichnet, dass**
- zumindest der Mündungsabschnitt der Düse (112) und/oder des Diffusors (113) über seinen gesamten Umfang, oder
- nur ein Umfangsabschnitt der Düse (112) und/oder des Diffusors (113), insbesondere ein unterer, sich um wenigstens 120°, vorzugsweise um etwa 180°, erstreckender Umfangsabschnitt der Düse (112) und/oder des Diffusors (113),
zwischen der Betriebsposition und der Öffnungsposition hin und her bewegbar ist bzw. sind.

8. Verteilmaschine nach einem der Ansprüche 5 bis 7, **dadurch gekennzeichnet, dass** zumindest der der Übergabekammer (109) zugewandte Mündungsabschnitt der Düse (112) und/oder des Diffusors (113) zwischen seiner Betriebsposition und seiner Öffnungsposition um eine Schwenkachse (S) schwenkbar ist bzw. sind, wobei die Schwenkachse (8) insbesondere
- im Wesentlichen horizontal, und/oder
- am Umfang des Injektorgehäuses (119), insbesondere im Wesentlichen auf demselben Höhenniveau wie dessen Mittelachse,
angeordnet ist.

9. Verteilmaschine nach einem der Ansprüche 5 bis 8, **dadurch gekennzeichnet, dass** sowohl zumindest der der Übergabekammer (109) zugewandte Mündungsabschnitt der Düse (112) als auch zumindest der der Übergabekammer (109) zugewandte Mündungsabschnitt (113a) des Diffusors (113) gemeinsam zwischen der Betriebsposition und der Öffnungsposition hin und her bewegbar sind, wobei sowohl zumindest der Mündungsabschnitt der Düse (112) als auch zumindest der Mündungsabschnitt (113a) des Diffusors (113) an einem zwischen der Betriebsposition und der Öffnungsposition hin und her bewegbaren Wandabschnitt (121) des Injektorgehäuses (119) angeordnet sind, welcher sich insbesondere um einen Umfang zwischen 120° und 240°, vorzugsweise um etwa 180°, erstreckt.

10. Verteilmaschine nach Anspruch 9, **dadurch gekennzeichnet, dass** der Wandabschnitt (121) des Injektorgehäuses (119) und/oder das Injektorgehäuse (119)
- in Bezug auf eine die Mittelachse des Injektorgehäuses (119) umfassende Radialebene im Wesentlichen symmetrisch ausgestaltet, und/oder
- in der Betriebsposition gegen das Injektorgehäuse (119) verspannbar
ist.

11. Verteilmaschine nach einem der Ansprüche 5 bis 10, **dadurch gekennzeichnet, dass** zumindest der der Übergabekammer (109) zugewandte Mündungsabschnitt der Düse (112) und/oder des Diffusors (113) in der Öffnungsposition lösbar feststellbar ist bzw. sind.

12. Verteilmaschine nach einem der Ansprüche 5 bis 11, **dadurch gekennzeichnet, dass** der Übergabekammer (109) der Verteilmaschine (100) eine Schiebeführung (125) zugeordnet ist, welche insbesondere zwei parallele Profilabschnitte (126a, 126b) aufweist, welche in Richtung ihrer einander zugewandten Seiten öffnen, wie in Form von Profilschienen und/oder in Form von Auflageflächen aufweisenden U-Profilen.

13. Verteilmaschine nach Anspruch 12, **dadurch gekennzeichnet, dass** zumindest der der Übergabekammer (109) zugewandte Mündungsabschnitt der Düse (112) und/oder des Diffusors (113), welche(r) zwischen der Betriebsposition und der Öffnungsposition hin und her bewegbar ist bzw. sind, in Axialrichtung zwischen den beiden Profilabschnitten (126a, 126b) der Schiebeführung (125) angeordnet ist bzw. sind.

14. Verteilmaschine nach Anspruch 12 oder 13, **dadurch gekennzeichnet, dass** die Schiebeführung (125)
- an der Unterseite des Injektorgehäuses (119) angeordnet ist; und/oder
- sich im Wesentlichen senkrecht zur Mittelachse sowohl der Düse (112) als auch des Diffusors (113) erstreckt; und/oder
- in einer im Wesentlichen horizontalen Ebene angeordnet ist.

15. Aufnahmeeinrichtung (200) einer Einheit zur Entnahme einer Probe an Verteilgut, wie Saatgut und/oder Dünger, aus einer Verteilmaschine (100) nach einem der Ansprüche 1 bis 4, an deren ihrer Einlassöffnung (202) entgegengesetztem Ende insbesondere eine Sammeleinrichtung (204) für das Verteilgut befestigt ist.
